# EUROPEAN PATENT SPECIFICATION

(11) **EP 0 659 300 B1**
(45) Date of publication and mention of the grant of the patent: **10.04.2002**
(21) Application number: 94919404.7
(22) Date of filing: 07.06.1994
(51) Int. Cl.: H01R 4/60

(54) **PRE-BUSSED RIGID CONDUIT**
VORKANALISIERTE STARRE RÖHRE
CONDUITE RIGIDE MUNIE DE BUS

(30) Priority: 30.06.1993 US 85341
(43) Date of publication of application: 28.06.1995
(73) Proprietor: SQUARE D COMPANY, Palatine, Illinois 60067 (US)
(72) Inventor: WHITNEY, Robert, I., Brookville, IN 47012 (US); O'NAN, Glenn, S., Hamilton, OH 45013 (US); REED, Steven, F., Oxford, OH 45056 (US); SIMMERING, Lisa, C., Fair Play, SC 29643 (US); BRYANT, Aubrey, Liberty, IN 47353 (US)
(74) Representative: Gray, John James
(86) International application number: PCT/US94/06423
(87) International publication number: WO 95/01663

(56) References cited:
- WO-A-92/17922
- GB-A- 1 087 605
- US-A- 1 843 671
- US-A- 3 005 037
- US-A- 3 871 734
- US-A- 4 154 302

## Description

The technical field to which this invention pertains is electrical distribution feeder systems for use in industrial and commercial locations.

In the past, industrial and commercial electrical distribution feeder systems have generally employed cable and conduit, cable and cable tray, cable and wireway, or electrical busway. Where cable is used with conduit, the conduit must first be installed and then cables are pulled through it to complete the installation. Cable used with cable tray or wireway again involves the installation of the cable tray or wireway first and then laying of cables in the tray or wireway to complete the installation. Busway installations are generally simpler than cable and conduit or cable and tray or wireway since the conductors are already inside the protective enclosure and require no additional labor after the enclosure is installed. Busway designs of the past have generally included a number of bus bars having a rectangularly-shaped cross-section placed parallel to one another in a common plane and installed in a rectangularly shaped enclosure. The sections of busway are produced in specific lengths which can not be altered in the field during installation. For this reason, if special lengths are required they must be engineered and manufactured at the factory. This special engineering and manufacturing requires additional time for shipment to the job site and generally an increase in cost to the customer. GB-A-1,087,605 discloses a bus-way which includes rod-type bus-bars wherein individual lengths of bus-way may be more readily connected end to end. Bus bar connection devices are also used which serve as physical support for the bus bars within the bus-way trunking.

WO-A-92/17922 discloses an electrical feeder system which includes one or more lengths of a generally cylindrical tubular enclosure which can be similar in construction to conventional metallic conduit. Disposed within the enclosure are a plurality of substantially rigid electrical conductors. End plugs are provided at each end of each length of enclosure for sealing the ends of the enclosure and supporting the conductors therein. The end plugs are made of an electrically insulating material and are dimensioned to be sealingly received within the ends of the lengths of enclosure. Longitudinal passageways are provided within the end plugs for tightly receiving each of the conductors. The passageways are spaced apart from each other and the inner wall of the enclosure to prevent physical and electrical contact between the conductors and between the conductors and the inner wall of the enclosure

The present invention provides an alternative to cable and conduit, cable and tray, and busway designs for electrical feeder systems, particularly in the ampacity range of approximately 60 to 800 amperes.

In accordance with the present invention, there is provided a section of pre-bussed conduit comprising in combination: a substantially rigid enclosure extending along a longitudinal axis between a first end region and a second end region; a plurality of substantially rigid conductors within said enclosure, said plurality of rigid conductors extending from said first end region of said enclosure to said second end region of said enclosure, each said conductor being partially enclosed within an insulating sheath; and a support member for supporting said plurality of conductors within said enclosure in alignment with said longitudinal axis, said support member separating said plurality of conductors one from the other; characterised in that said enclosure defines an inside surface having a plurality of pockets extending along said longitudinal axis between said first and second end regions, each said conductor being received within one of said pockets, said plurality of rigid conductors being maintained within said pockets by said support member to form a pattern that is uniform in cross-section along the entire length of said section so that said plurality of rigid conductors form a pattern of male terminals extending a predetermined distance from each end region of said section of pre-bussed conduit.

The pre-bussed rigid conduit sectionalized electrical distribution system of the present invention is a combination of both conduit and bus-way. However, the system of the present invention has significant advantages over the prior art systems from which it was derived, particularly in the ampacity range of 60 to 800 amperes.

One advantage of the electrical distribution system of present invention is that the positioning of the conductors in the cylindrical enclosure permits a generally smaller and stronger enclosure than that usually employed in busway devices of the same current carrying capacity. The pre-bussed rigid conduit enclosure of the present invention is also generally smaller than that required for cable and conduit of the same current capacity.

Another advantage of the pre-bussed rigid conduit of the present invention is that it can be manufactured in specific lengths to facilitate easy handling and installation; however, unlike prior art busway systems, the pre-bussed rigid conduit of the present invention can be easily field modified with hand tools to lengths as short as 4 inches.

Yet another advantage of the present invention is that the enclosure can also provide a water resistant environment for the electrical conductors enclosed therein when assembled with standard waterproof electrical conduit fittings.

Other features and advantages of the invention will become apparent to those skilled in the art upon review of the following detailed description, claims and drawings.

### BRIEF DESCRIPTION OF THE DRAWINGS

The foregoing and other objects, aspects and advantages will be better understood from the following detailed description of a preferred embodiment of the invention with reference to the drawings, in which:
FIG. 1 is an isometric view of two sections of pre-bussed rigid conduit of the present invention;
FIG. 2 is a cross-sectional view of a section of pre-bussed rigid conduit enclosure having pockets for receiving the electrical conductors and a foam conductor support means.
FIG. 3 is an isometric view of a pre-bussed rigid conduit conductor without the insulating sleeve.
FIG. 4 is an exploded isometric view of a joint connector housing.
FIG. 5 is an end view of a field alterable cut-off section.
FIG. 6 is a cross-sectional view of a pre-bussed rigid conduit cut-off section of the present invention;
FIG. 7 is an isometric view of an end feed unit;

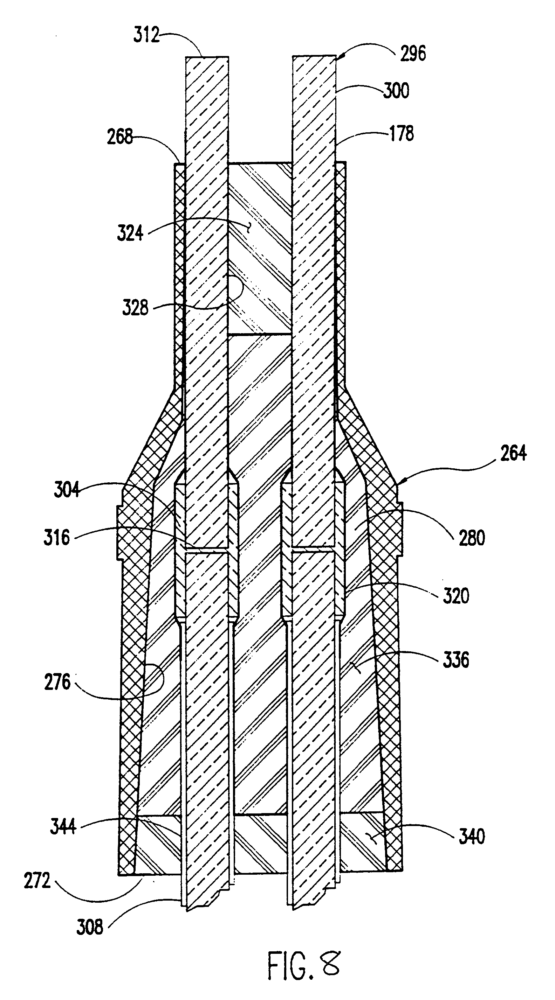

FIG. 8 is a cross-sectional view taken along lines 19--19 of FIG. 7 of an end feed unit;
FIG. 9 is an isometric view of an end feed unit installed on a wiring enclosure; and
FIG. 10 is a schematic diagram of an electrical distribution feeder system comprised of field alterable and non-field alterable pre-bussed conduit sections.

Before one embodiment of the invention is explained in detail, it is to be understood that the invention is not limited in its application to the details of construction in the following description or illustrated in the drawings. The invention is capable of other embodiments and of being practiced or being carried out in various other ways. Also, it is to be understood that the phraseology and terminology used herein is for the purpose of description and should not be regarded as limiting.

### Detailed description of a preferred embodiment of the present invention.

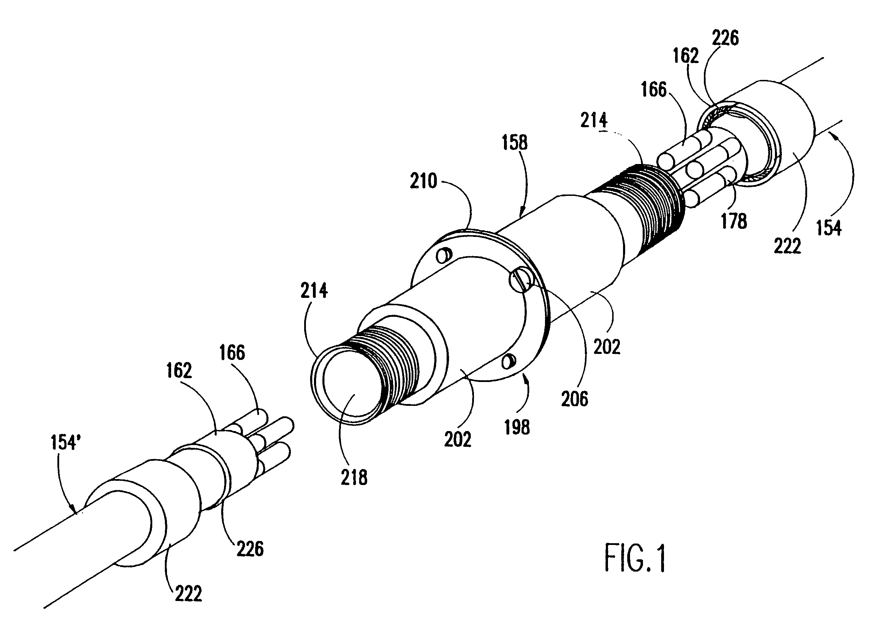

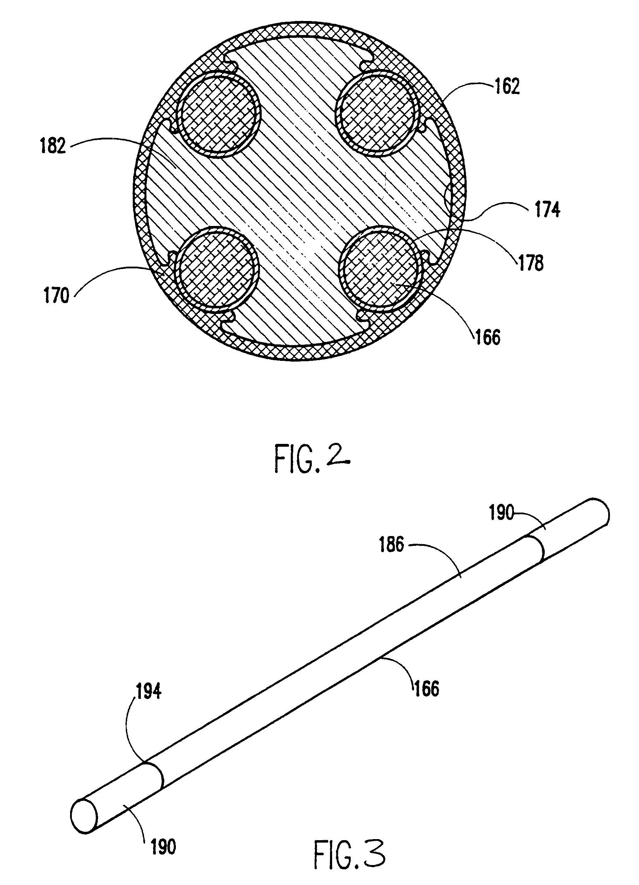

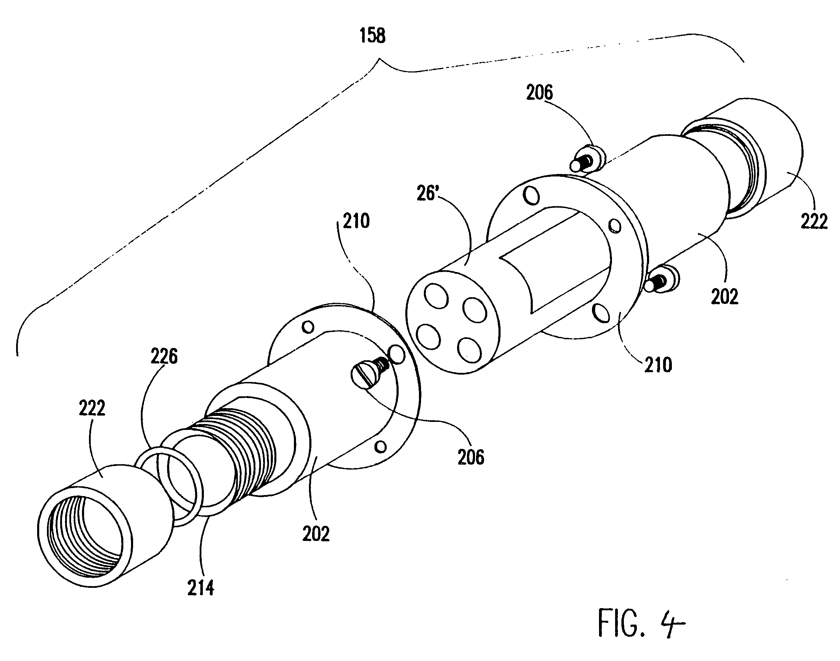

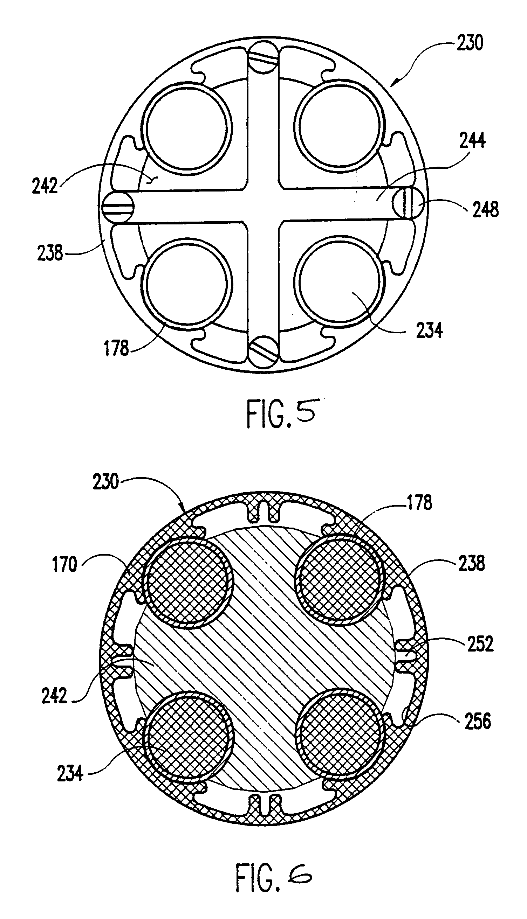

FIG. 1 illustrates pre-bussed rigid conduit of the present invention. Here, pre-bussed sections (shown in FIG. 1) that are not field alterable as to length, are used in combination with pre-bussed sections (shown in FIGS. 5 and 6) that are field alterable. In FIG. 1, a first and second section 154 and 154' respectively of pre-bussed rigid conduit and their joint connecting member 158 are shown. In this embodiment the tubular enclosure 162 is extruded from an electrically conductive material and encloses a plurality of electrical conductors 166. The housing 162 is provided with four semicircular pockets 170, as shown in FIG. 2. Each pocket 170 is integrally formed from an inside surface 174 of the tubular enclosure 162 and each is equally spaced apart one from the other along the inside surface 174. The pockets 170 extend into the void defined by the inside surface 174 of the enclosure 162 and receive the electrical conductors 166. The pockets 170 provide an improved heat sink for dissipating heat produced by current flowing in the conductors 166. Each conductor 166 is enclosed in an electrically insulated sheath 178 which snugly surrounds the conductor 166 and electrically insulates the conductors 166 from one another and from the enclosure 162. The conductors 166 are supported and held in close contact with the pockets 170 along the entire length of the enclosure 162 by an expanded closed cell foam support 182 which is foamed in place after the conductors 166 are installed in the enclosure 162 and thereby completely fills the void within the enclosure 162. The foam support 182 also restrains the conductors 166 within the enclosure 162 by bonding with both the inside surface 174 of the enclosure 162 and the insulating sheath 178 surrounding the conductors 166. Each conductor 166 is made from three parts, an aluminum conductor 186 having high electrical conductivity properties and two copper contact pieces 190 as shown in FIG. 3. Each aluminum conductor 186 has one copper contact piece 190 attached to each end by a friction welding process. The copper contact piece 190 has a diameter generally equal to that of the aluminum conductor 186. During the welding process a small burr 194 is formed around the conductor 166 at the point where the aluminum conductor 186 and copper contact pieces 190 are joined. This burr 194 must be removed prior to installing the insulating sheath 178 on the conductor 166. The conductors 166 are of sufficient length that the copper contact pieces 190 extend out past each end of the tubular enclosure 162 a predetermined length.

As shown in FIGS. 1 and 4, a joint connecting member 26' is used in the joint connecting member 158 to electrically connect two adjoining sections 154 and 154' of a pre-bussed rigid conduit. A housing 198 consisting of two identical halves 202 connected together by means such as screws 206 encloses the joint connecting member 26'. Each housing half 202 is generally cylindrical in shape and includes a flanged end 210, a threaded end 214, and a stepped passage 218 connecting the flanged end 210 and threaded end 214. The stepped passage is sized such that the opening at the flanged end 210 will snugly receive the joint connecting member 26'. The joint connecting member 26' is received within the two flanged ends 210 of the housing halves 202 and held in place by the stepped passage 218. The threaded ends 214 receive compression nuts 222 and compression washers 226 of the type commonly used to connect adjoining sections of electrical metallic tubing.

Referring now to FIGS. 5 and 6, since conductors 166 extend past the ends of the enclosure 162 in this embodiment of the invention, a field alterable section 230 is provided to allow field alteration of the length of the pre-bussed conduit run. The field alterable section 230 construction is similar to that of the sections 154/154' shown in FIGS. 1 and 2 and described above. However the cut-off fitting 230 conductors 234 are slidably movable within the cutoff fitting housing 238. In order to permit the conductors 234 to be slidably movable within the housing 238 a preformed expanded closed cell foam conductor support 242 is used to support and hold the conductors 234 in place instead of the foamed in place conductor support 182 of the sections 154/154'. FIG. 5 is an end view of a cut-off fitting 230 showing an X-shaped retainer 244 which is fastened to the each end of the enclosure 238 by screws 248 and prevents the preformed conductor support 242 and the conductors 234 from sliding out of the enclosure 238. FIG. 6 is a cross-sectional view of the cut-off fitting 230 without a retainer 244. The tubular enclosure 238 of the cut-off fitting 230 is similar to that of the straight section enclosure 162 shown in FIG. 1, but also includes four generally U-shaped slots 252. Each slot 252 is integrally formed from the inside surface 256 of the enclosure 238 and extends into the void defined by the inside surface 256 of the enclosure 238. Each slot 252 is equally spaced between two pockets 170 such that it may receive one of the screws 248 holding the X-shaped retainer 244 in place at the end of the enclosure 238. The cut-off fitting conductors 234 are copper for their entire length such that a copper contact surface is available at any point along the conductor 234. Each conductor 234 is also enclosed in an electrically insulating sheath 178 which snugly surrounds the conductor 234 and electrically insulates it from other conductors 234 and the enclosure 238.

To field alter the length of a cut-off fitting 230 the first step is to remove the X-shaped retainers 244 from both ends of the enclosure 238. The conductors 234 may then be pushed out of one end of the enclosure 238 until the ends of the conductors 234 are flush with the other end of the enclosure 238. The desired enclosure length is then measured from the end of the enclosure 238 from which the conductors 234 are extending. The enclosure 238 is then marked at the desired length and cut off squarely with a hack saw or other suitable means. The preformed conductor support 242 and conductors 234 are also cut off simultaneously during this operation. Any burrs or sharp edges on the cut end of the enclosure 234 which could possibly cut or damage the insulating sheath 178 covering the conductors 238 must be removed. The conductors 234 are then pushed back into the enclosure 238 such that an equal amount of each conductor 234 extends outward past each end of the cut-off fitting enclosure 238. Any burrs on the cut end of the conductors 234 are removed and the insulating sheath 178 is stripped away from a portion of the cut end of each conductor 234 to expose an electrical contact surface. The X-shaped retainers 244 are reattached to the ends of the enclosure 234 to retain the preformed conductor support 242 and conductors 234 in place within the enclosure 238.

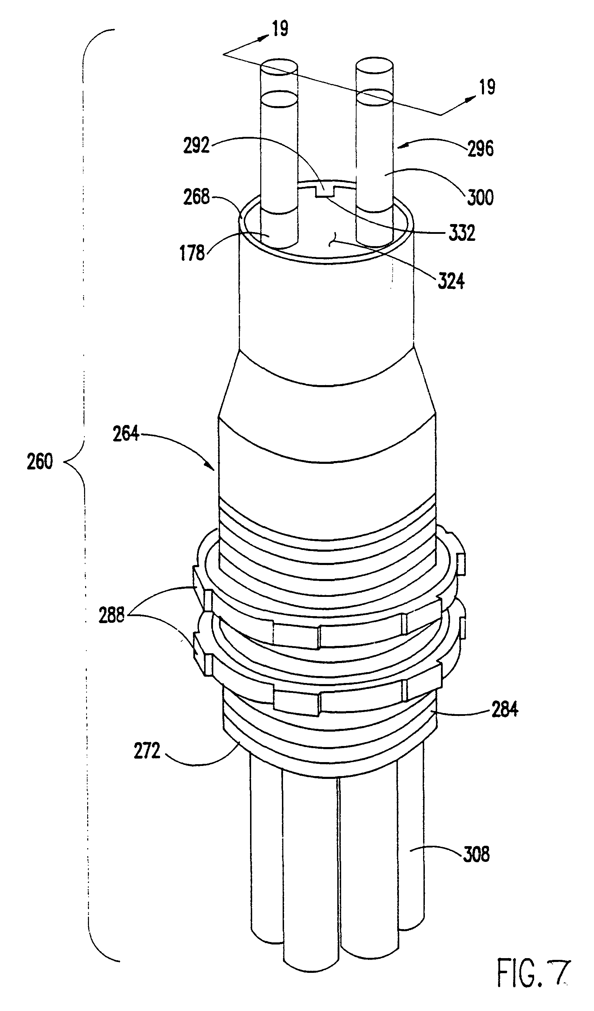

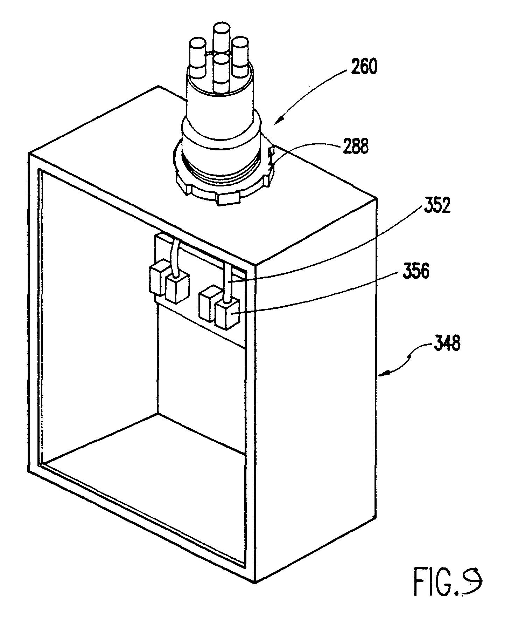

An end feed unit generally indicated by reference numeral 260 as shown in FIG. 7 is provided for connecting the pre-bussed rigid conduit feeder system of the present invention to a power source or for providing a power tap-off point. The end feed unit 260 includes a generally cylindrical housing 264 which has a first end 268 of the same diameter as the pre-bussed rigid conduit enclosure 162, a second end 272 having a larger diameter, and a generally cylindrical stepped passage 276 connecting the first and second ends 268 and 272 respectively. The larger diameter of the passage 276 at the second end 272 is of sufficient size to form a terminal connection area 280. The second end 272 also has an externally threaded portion 284 for receiving one or more nuts 288. At the first end 268 a rib 292 running along the longitudinal axis of the housing 264 extends into the passage 276. A plurality of electrical conductor assemblies 296 each having a rigid electrical conductor 300, a butt splice compression connector 304, and an insulated flexible electrical conductor 308 of sufficient length for making electrical connections within a panelboard or other enclosed wiring space are partially enclosed within the housing. The rigid electrical conductors 300 are enclosed in an electrically insulating sheath 178 and have a first end 312 and a second end 316. A portion of the insulating sheath 178 is removed at each of the first and second ends 312 and 316 respectively to provide an electrical contact surface. The second ends 316 of the rigid conductor 300 are crimped in one end of the butt splice compression connectors 304. A portion of insulation is removed from one end of each of the flexible conductors 308 providing a contact area that is crimped in the other end of one of the butt splice compression connectors 304. A piece of heat shrinkable electrical insulation 320 is placed over the butt splice compression connector 304 and the adjacent insulation sheath 178 of the rigid conductor 300 and the insulation of the flexible conductor 308 and then heated until it shrinks tightly around the connection. A first end plug 324 sized to be snugly received within the passage at the first end 268 of the housing 264 is provided with passages 328 for snugly receiving the rigid conductors 300 and a slot 332 for receiving the rib 292 which prevents the first end plug 324 from rotating within the passage 276. After the conductor assemblies 296 are completed the first end 312 of each rigid conductor 300 is inserted into the passage 276 at the second end 272 of the housing 264 and is pushed through one of the passages 328 of the first end plug 324 until a specified length extends outward past the first end 268 of the housing 264. At this point the butt splice compression connectors 304 are enclosed in the terminal connection area 280 of the stepped passage 276. A potting material 336 is then poured into the stepped passage 276 through the second end 272 of the housing 264. The potting material 336, when cured, fixes the electrical conductor assemblies 296 within the housing 264. A second end plug 340 sized to be snugly received within the second end 272 of the stepped passage 276 is provided with passages 344 for snugly receiving the insulated flexible conductors 308 and may be installed at this time if desired. The second end 272 of the housing 264 is intended to be installed through a hole provided in a panelboard or other enclosed wiring box 348 and is attached to the panelboard by the nuts 288 as shown in FIG. 9. The free ends 352 of the flexible conductors 308 are intended to be connected to wiring terminals 356 provided within the panelboard or wiring box 348.

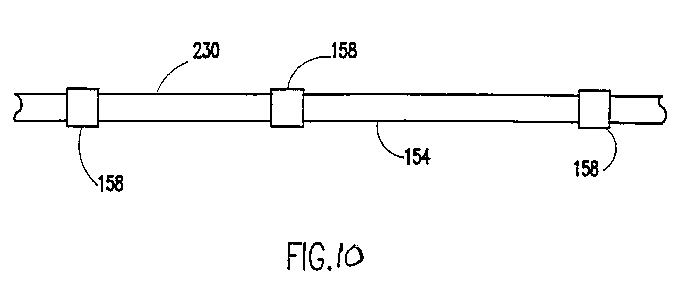

Referring now to FIG. 10, it shows a segment of an electrical feeder distribution system comprised of sections 154 and described in connection with FIGS. 1-4 joined by connectors 158 to a field alterable section 230 described in connection with FIGS. 5 and 6.

It is therefore intended that the following claims be interpreted as covering all such alterations and modifications as fall within the scope of the appended claims.

While the invention has been described in terms of a single preferred embodiment, those skilled in the art will recognize that the invention can be practiced with modification within the scope of the appended claims.

## Claims

1. A section of pre-bussed conduit (154,230) comprising in combination:
a substantially rigid enclosure (162,238) extending along a longitudinal axis between a first end region and a second end region;
a plurality of substantially rigid conductors (166,234) within said enclosure (162,238), said plurality of rigid conductors (166,234) extending from said first end region of said enclosure (162,238) to said second end region of said enclosure (162,238), each said conductor (166,234) being partially enclosed within an insulating sheath (178); and
a support member (182,242) for supporting said plurality of conductors (166,234) within said enclosure (162,238) in alignment with said longitudinal axis, said support member (182,242) separating said plurality of conductors (166,234) one from the other;
**characterised in that** said enclosure (162,238) defines an inside surface (174,256) having a plurality of pockets (170) extending along said longitudinal axis between said first and second end regions, each said conductor (166,234) being received within one of said pockets (170), said plurality of rigid conductors (166,234) being maintained within said pockets (170) by said support member (182,242) to form a pattern that is uniform in cross-section along the entire length of said section (154,230) so that said plurality of rigid conductors (166,234) form a pattern of male terminals extending a predetermined distance from each end region of said section of pre-bussed conduit (154,230).

2. A section of pre-bussed conduit (154) as in claim 1, wherein that portion of said substantially rigid conductors (166) forming said pattern of male terminals extending from each said end region of said section of pre-bussed conduit (154) are made of a first conductive material (190) and wherein that portion of said substantially rigid conductors extending between each said end region of said section of pre-bussed conduit are made of a second conductive material (186).

3. A section of pre-bussed conduit (154) as in claim 2, wherein said first conductive material (190) is copper and said second conductive material (186) is aluminium.

4. A section of pre-bussed conduit (154,230) as in claim 1, 2 or 3, wherein said support member (182,242) is an expanded closed cell foam that extends the length of said section (154,230).

5. A section of pre-bussed conduit (154) as in claim 4, wherein said closed cell foam is foamed in place after said substantially rigid conductors (166) are in place in said substantially rigid enclosure (162), so that said foam member bonds both with said substantially rigid enclosure (162) and said insulating sheath (178) enclosing each said substantially rigid conductor (166).

6. A section of pre-bussed conduit (230) as in claim 4, wherein said plurality of conductors (234) are longitudinally movable with respect to said support member 242 and said enclosure (238) such that said section of pre-bussed conduit (230) can be field altered to a desired length by cutting across said enclosure (238) and said conductors (234).

7. A section of pre-bussed conduit (230) as in claim 6 wherein said support member (242) is preformed externally of said enclosure (238) and is dimensioned to be slidably received with said enclosure (238).

8. A section of pre-bussed conduit (230) as in claim 7, further includes a support member retaining means (244) at each end of said substantially rigid enclosure (238) and means (252) integrally formed from said substantially rigid enclosure (238) for securing said support member retainer means (242) to said substantially rigid enclosure (238).

9. A section of pre-bussed conduit (154,230) as claimed in any preceding claim, wherein said pockets (170) are integrally formed from said substantially rigid enclosure (162,238) for sinking heat from said substantially rigid conductors (166,234) received therein to said substantially rigid enclosure (162,238) for efficient heat dissipation.

10. Two or more sections of pre-bussed conduit (154) (230) of claim 1 wherein said two or more sections of pre-bussed conduit (154,230) are linearly arranged for connection both electrically and mechanically by a joint connecting member (158), said joint connecting member (158) being placed between adjacent and regions of said linearly arranged pre-bussed conduit sections (154,230) such that said male terminals of said adjacent end regions are received in said joint connecting member (158) thus forming an electrical distribution system comprised of multiple sections of pre-bussed conduit (154,230).

## Patentansprüche

1. Abschnitt (154, 230) eines vorkanalisierten Rohrs, der in Kombination die folgenden Merkmale aufweist:
- eine im wesentlichen starre Ummantelung (162, 238), die sich entlang eine Längsachse zwischen einem ersten Endbereich und einem zweiten Endbereich erstreckt,
- im wesentlichen starre Leiter (166, 234) innerhalb der Ummantelung (162, 238), wobei sich die starren Leiter (166, 234) vom ersten Endbereich der Ummantelung (162, 238) zum zweiten Endbereich der Ummantelung (162, 238) erstrecken, und wobei jeder Leiter (166, 234) teilweise innerhalb einer Isolierhülse (178) angeordnet ist, und
- ein Halteteil (182, 242), um die Leiter (166, 234) innerhalb der Ummantelung (162, 238) mit der Längsachse ausgerichtet zu halten, wobei das Halteteil (182, 242) die Leiter (166, 234) voneinander trennt,
**dadurch gekennzeichnet, dass**
die Ummantelung (162, 238) eine Innenfläche (174, 256) mit mehreren Taschen (170) hat, die sich entlang der Längsachse zwischen dem ersten und dem zweiten Endbereich erstrecken, wobei jeder Leiter (166, 234) in einer der Taschen (170) aufgenommen ist, und wobei die starren Leiter (166, 234) vom Halteteil (182, 242) in den Taschen (170) gehalten sind, um eine Anordnung mit einem gleichmäßigen Querschnitt entlang der gesamten Länge des Abschnitts (154, 230) zu bilden, so dass die starren Leiter (166, 234) eine Anordnung aus Steckanschlüssen bilden, die sich um eine vorgegebene Strecke von jedem Endbereich des Abschnitts (154,230) des vorkanalisierten Rohrs aus vorstehen.

2. Abschnitt (154) eines vorkanalisierten Rohrs nach Anspruch 1, bei dem der Teil der im wesentlichen starren Leiter (166), der die Anordnung aus Steckanschlüssen, die sich von jedem Endbereich des Abschnitts des vorkanalisierten Rohrs (154) aus erstrecken, bildet, aus einem ersten leitenden Material (190) hergestellt ist, und bei dem der Teil der im wesentlichen starren Leiter, der sich jeweils zwischen den Endbereichen des Abschnitts des vorkanalisierten Rohrs erstreckt, aus einem zweiten leitenden Material (186) hergestellt ist.

3. Abschnitt (154) eines vorkanalisierten Rohrs nach Anspruch 2, bei dem das erste leitende Material (190) Kupfer ist und das zweite leitende Material (186) Aluminium ist.

4. Abschnitt (154, 230) eines vorkanalisierten Rohrs nach Anspruch 1, 2 oder 3, bei dem das Halteteil (182, 242) ein aufgeschäumter Schaumstoff mit geschlossenen Zellen ist, der sich über die Länge des Abschnitts (154, 230) erstreckt.

5. Abschnitt (154) eines vorkanalisierten Rohrs nach Anspruch 4, bei dem der Schaumstoff mit geschlossenen Zellen an der Verwendungsstelle aufgeschäumt wird, nach dem die im wesentlichen starren Leiter (166) in der im wesentlichen starren Ummantelung (162) angeordnet sind, so dass sich das Schaumstoffteil sowohl mit der im wesentlichen starren Ummantelung (162) als auch mit der Isolierhülle (178), die jeden der im wesentlichen starren Leiter (166) umgibt, verbindet.

6. Abschnitt (230) eines vorkanalisierten Rohrs nach Anspruch 4, bei dem die Leiter (234) in Längsrichtung bezüglich des Halteteils (242) und der Ummantelung (238) beweglich sind, so dass der Abschnitt des vorkanalisierten Rohrs (230) durch das Durchschneiden der Ummantelung (238) und der Leiter (234) vor Ort auf eine gewünschte Länge zugeschnitten werden kann.

7. Abschnitt (230) eines vorkanalisierten Rohrs nach Anspruch 6, bei dem das Halteteil (242) außerhalb der Ummantelung (238) vorgefertigt wird und so dimmensioniert ist, dass es gleitbeweglich in der Ummantelung (238) aufgenommen ist.

8. Abschnitt (230) eines vorkanalisierten Rohrs nach Anspruch 7, der weiterhin eine Halteteil-Befestigungsvorrichtung (244) an jedem Ende der im wesentlichen starren Ummantelung (238) und Mittel (252) hat, die einstückig mit der im wesentlichen starren Ummantelung (238) gebildet sind, um die Halteteil-Befestigungsvorrichtung (242) an der im wesentlichen starren Ummantelung (238) zu befestigen.

9. Abschnitt (154, 230) eines vorkanalisierten Rohrs nach einem der vorhergehenden Ansprüche, bei dem die Taschen (170) einstückig mit der im wesentlichen starren Ummantelung (162, 238) gebildet sind, um die von den im wesentlichen starren Leitern (166, 234) aufgenommene Wärme an die im wesentlichen starre Ummantelung (162, 238) zur Wärmeableitung wirksam abzuführen.

10. Zwei oder mehrere Abschnitte (154, 230) eines vorkanalisierten Rohrs nach Anspruch 1, bei denen zwei oder mehrere Abschnitte eines vorkanalisierten Rohrs (154, 230) geradlinig angeordnet sind, um sie durch ein Verbindungsteil (158) sowohl elektrisch als auch mechanisch zu verbinden, wobei das Verbindungsteil (158) zwischen zwei benachbarten Endbereichen der geradlinig angeordneten vorkanalisierten Leiterabschnitte (154, 230) angeordnet ist, so dass die vorstehenden Anschlüsse der benachbarten Endbereiche in dem Verbindungsteil (158) aufgenommen sind, und folglich ein elektrisches Leitungssystem mit mehreren Abschnitten von vorkanalisierten Rohren (154, 230) bilden.

## Revendications

1. Section de conduit d'interconnexion par bus préfabriqué (154, 230), comprenant en combinaison :
- une enveloppe sensiblement rigide (162, 238) s'étendant selon un axe longitudinal entre une première région d'extrémité et une deuxième région d'extrémité ;
- une pluralité de conducteurs sensiblement rigides (166, 234) dans ladite enveloppe (162, 238), ladite pluralité de conducteurs rigides (166, 234) s'étendant depuis ladite première région d'extrémité de ladite enveloppe (162, 238) jusqu'à ladite deuxième région d'extrémité de ladite enveloppe (162, 238), chacun desdits conducteurs (166, 234) étant partiellement enfermé dans une gaine isolante (178) ; et
- un organe de support (182, 242) pour supporter ladite pluralité de conducteurs (166, 234) dans ladite enveloppe (162, 238) en alignement avec ledit axe longitudinal, ledit organe de support (182, 242) séparant ladite pluralité de conducteurs (166, 234) les uns des autres ;
- **caractérisée en ce que** ladite enveloppe (162, 238) définit une surface intérieure (174, 256) munie d'une pluralité de poches (170) s'étendant le long dudit axe longitudinal entre lesdites première et deuxième régions d'extrémité, chacun desdits conducteurs (166, 234) étant reçu dans une desdites poches (170), ladite pluralité de conducteurs rigides (166, 234) étant maintenue dans lesdites poches (170) par ledit organe de support (182, 242) afin de former un motif qui est uniforme en section transversale, le long de la longueur entière de ladite section (154, 230), de façon à ce que ladite pluralité de conducteurs rigides (166, 234) forme un motif de bômes mâles s'étendant à une distance prédéterminée de chaque région d'extrémité de ladite section de conduit d'interconnexion par bus préfabriqué (154, 230).

2. Section de conduit d'interconnexion par bus préfabriqué (154) selon la revendication 1, dans laquelle ladite partie desdits conducteurs sensiblement rigides (166), qui forme ledit motif de bornes mâles s'étendant depuis chacune desdites régions d'extrémité de ladite section de conduit d'interconnexion par bus préfabriqué (154), est constituée en un premier matériau conducteur (190) et dans laquelle ladite partie desdits conducteurs sensiblement rigides, qui s'étend entre chaque région d'extrémité de ladite section de conduit d'interconnexion par bus préfabriqué, est constituée en un deuxième matériau conducteur (186).

3. Section de conduit d'interconnexion par bus préfabriqué (154) selon la revendication 2, dans laquelle ledit premier matériau conducteur (190) est du cuivre et ledit deuxième matériau conducteur (186) est de l'aluminium.

4. Section de conduit d'interconnexion par bus préfabriqué (154, 230) selon la revendication 1, 2 ou 3, dans laquelle ledit organe de support (182, 242) est une mousse expansée à cellules fermées qui s'étend sur la longueur de ladite section (154, 230).

5. Section de conduit d'interconnexion par bus préfabriqué (154) selon la revendication 4, dans laquelle ladite mousse à cellules fermées est formée en place après que lesdits conducteurs sensiblement rigides (166) aient été mis en place dans ladite enveloppe sensiblement rigide (162), afin que ledit organe en mousse adhère à la fois à ladite enveloppe sensiblement rigide (162) et à ladite gaine isolante (178) renfermant chacun desdits conducteurs sensiblement rigides (166).

6. Section de conduit d'interconnexion par bus préfabriqué (230) selon la revendication 4, dans laquelle ladite pluralité de conducteurs (234) est mobile longitudinalement par rapport audit organe de support (242) et à ladite enveloppe (238), de façon à ce que ladite section de conduit d'interconnexion par bus préfabriqué (230) puisse être ajustée sur le site à la longueur voulue en pratiquant une coupe à travers ladite enveloppe (238) et lesdits conducteurs (234).

7. Section de conduit d'interconnexion par bus préfabriqué (230) selon la revendication 6, dans laquelle ledit organe de support (242) est formé au préalable à l'extérieur de ladite enveloppe (238) et est dimensionné afin d'être reçu, de façon coulissante, à l'intérieur de ladite enveloppe (238).

8. Section de conduit d'interconnexion par bus préfabriqué (230) selon la revendication 7, incluant en outre de moyens de retenue d'organe de support (244) à chaque extrémité de ladite enveloppe sensiblement rigide (238) et des moyens (252), formés de façon intégrale à partir de ladite enveloppe sensiblement rigide (238), pour fixer lesdits moyens de retenue d'organe de support (244) à ladite enveloppe sensiblement rigide (238).

9. Section de conduit d'interconnexion par bus préfabriqué (154, 230) selon une quelconque revendication précédente, dans laquelle lesdites poches (170) sont formées de façon intégrale à partir de ladite enveloppe sensiblement rigide (162, 238) afin de dissiper la chaleur, provenant desdits conducteurs sensiblement rigides (166, 234) et reçue à cet endroit, vers ladite enveloppe sensiblement rigide (162, 238) pour réaliser une dissipation thermique efficace.

10. Deux ou davantage de sections de conduits d'interconnexion par bus préfabriqué (154) (230) selon la revendication 1, dans lesquelles lesdites deux ou davantage de sections de conduits d'interconnexion par bus préfabriqué (154, 230) sont disposées linéairement pour une connexion, à la fois électrique et mécanique, par un organe de jonction de connexion (158), ledit organe de jonction de connexion (158) étant disposé entre des régions d'extrémités adjacentes desdites sections de conduits d'interconnexion par bus préfabriqué (154, 230) disposées linéairement, de façon à ce que lesdites bornes mâles desdites régions d'extrémités adjacentes soient reçues dans ledit organe de jonction de connexion (158), en formant ainsi un système de distribution électrique composé de sections multiples de conduits d'interconnexion par bus préfabriqué (154, 230).
